(19) Europäisches Patentamt
European Patent Office
Office européen des brevets

(11) **EP 1 313 041 A1**

(12) **EUROPEAN PATENT APPLICATION**
published in accordance with Art. 158(3) EPC

(43) Date of publication:
**21.05.2003 Bulletin 2003/21**

(51) Int Cl.⁷: **G06F 17/60**, G06F 19/00, G07G 1/14

(21) Application number: **00949920.3**

(22) Date of filing: **26.07.2000**

(86) International application number:
**PCT/JP00/05003**

(87) International publication number:
**WO 02/008980 (31.01.2002 Gazette 2002/05)**

(84) Designated Contracting States:
**AT BE CH CY DE DK ES FI FR GB GR IE IT LI LU MC NL PT SE**

(71) Applicant: **FUJITSU LIMITED**
**Kawasaki-shi, Kanagawa 211-8588 (JP)**

(72) Inventor: **KUMAMOTO, Kazuhiro Fujitsu Limited**
**Kawasaki-shi, Kanagawa 221-8588 (JP)**

(74) Representative: **Moutard, Pascal Jean et al**
**Cabinet Beau de Loménie,**
**Bavariaring 26**
**80336 Munich (DE)**

(54) **ELECTRONIC MONEY TRANSACTION SYSTEM**

(57)     The electronic money transaction processing system according to the present invention generates electronic money data which corresponds to a refund amount in response to a refund request from a user, and transmits this electronic money data directly to an IC card. Therefore, the user is able to instantly receive the refund amount as electronic money and, because the user is relieved of the task of paying electronic money from his or her own banking facility account to the IC card, user convenience is improved.

FIG. 3

| TRANSACTION NUMBER | TERMINAL NUMBER | TRANSACTION TIME | TRANSACTION AMOUNT | REFUND AMOUNT |
|---|---|---|---|---|
| '0000011100005 | 11001 | 2000/03/04 11:52.00 | 3,000 | 0 |
| '0000011100006 | 21022 | 2000/03/04 12:45.00 | 4,800 | 0 |
| '0000012300012 | 21022 | 2000/03/04 13:52.00 | 9,800 | 5,000 |
| '0000011100007 | 11001 | 2000/03/04 13:52.00 | 1,980 | 0 |
| '0000014400002 | 33003 | 2000/03/04 15:02.00 | 980 | 0 |
| '0000014400003 | 21022 | 2000/03/04 15:22.00 | 5,000 | 0 |
| '0000015800015 | 11001 | 2000/03/04 17:33.00 | 7,900 | 0 |
| '0000012300013 | 33003 | 2000/03/04 17:33.00 | 8,000 | 0 |
| '0000012300014 | 33003 | 2000/03/04 17:35.00 | −5,000 | 0 |

TRANSACTION HISTORY DATABASE

## Description

<u>TECHNICAL FIELD</u>

The present invention relates to an electronic money transaction processing system for processing transactions by means of electronic money, which is currency in electronic form, and more particularly to a refund processing method of the electronic money transaction processing system.

<u>BACKGROUND ART</u>

In recent years, electronic money, which is currency in electronic form, has come into widespread use. Electronic money is stored on an IC card as electronic data and it is possible, by means of communication with a dedicated terminal, to pay electronic money from the IC card and to pay electronic money to the IC card. An IC card is a card produced by embedding an LSI chip that contains a CPU and a memory in a plastic card, and is capable of executing a variety of processing such as electronic money charging processing and outstanding balance update processing, and so forth, in accordance with a predetermined program.

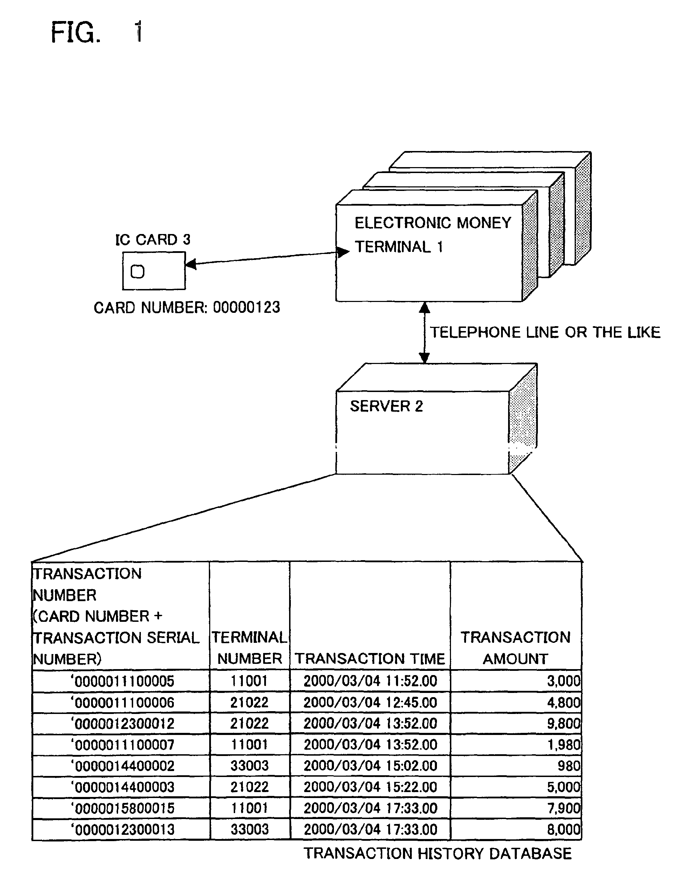

Fig. 1 illustrates product purchasing that uses electronic money. In Fig. 1, the electronic money user (referred to simply as "user" hereinafter) pays electronic money of a predetermined amount to an IC card from his or her own account via a payment terminal (not illustrated) managed by a banking facility. That is, electronic money data of the predetermined amount is stored on the IC card.

A retail store is provided with an electronic money terminal 1 and deducts the price of a good from an IC card 3. Specifically, the IC card 3 transmits electronic money data which corresponds to the purchase amount to the electronic money terminal 1, on the basis of communications with the electronic money terminal. The electronic money terminal 1 receives the electronic money data and then generates transaction data that includes the purchase amount. The electronic money terminal 1 may be a POS terminal of a POS system installed at a retail store, for example. The amount data generated by the electronic money terminal 1 is transmitted to a server 2. As illustrated, the server 2 manages transaction data histories from terminals that contain amount data. The transmission of transaction data to the server 2 is effected once a day after the close of business at the retail store, for example. Further, the server 2 transmits totalized transaction data to a host computer (not illustrated) of the banking facility. The host computer performs a settlement by transferring transaction data amounts from the user's account to the retail store's account.

Cases therefore arise where, after a good is purchased using electronic money, refund processing is required in accordance with a request from the user for the return of a good, for example. Refund processing is performed, for example, by transferring an amount from the retail store's account to the user's account as a result of the electronic money terminal (POS terminal) at the retail store creating transaction data that includes a negative transaction amount. In such a case, the user requires a certain amount of time (in the case of one settlement on one day, the following day) until the amount is paid to the user's own account. Furthermore, the user is required to repeat the task of paying electronic money from the payment terminal to the IC card.

Further, it is also possible that the refund processing will involve the retail store refunding cash rather than electronic money directly to the user. In such a case, the user can instantly receive cash that corresponds to the refund amount, but the electronic money is thereby converted to cash.

<u>DISCLOSURE OF THE INVENTION</u>

It is therefore an object of the present invention to provide an electronic money transaction processing system that makes it possible to directly refund electronic money promptly to an IC card as electronic money.

The electronic money transaction processing system according to the present invention, which serves to achieve the above object, generates electronic money data which corresponds to a refund amount in response to a refund request from a user, and transmits this electronic money data directly to the IC card. Therefore, the user is able to instantly receive the refund amount as electronic money and, because the user is relieved of the task of paying electronic money from his or her own banking facility account to the IC card, user convenience is improved.

For example, the electronic money transaction processing system according to the present invention comprises: a communication unit for communicating with a storage medium that stores electronic money data and for receiving, for each transaction, electronic money data which corresponds to a paid transaction amount from the storage medium; a transaction data storage unit for storing transaction data including at least a transaction amount for each transaction, and identification information identifying these transactions; an input unit for inputting a refund request to request a refund of a predetermined amount with respect to a predetermined transaction; and an electronic money data generation unit for generating electronic money data which corresponds to a predetermined amount on the basis of the refund request, wherein the communication unit transmits the generated electronic money data to the storage medium.

Preferably, the refund request includes identification information identifying the predetermined transaction; and the electronic money data generation unit searches for transaction data for each transaction which are stored in the storage unit, thereby detects the transaction data which includes the identification information of the predetermined transaction, and in a case where the transaction amount of the detected transaction data is equal to or more than the predetermined amount, generates electronic money data which corresponds to the predetermined amount.

BRIEF DESCRIPTION OF THE DRAWINGS

Fig. 1 serves to illustrate the flow of electronic money in a case where electronic money is used to purchase a good;
Fig. 2 is a block diagram of the electronic money terminal 1 and the server 2 that constitute the electronic money transaction processing system;
Fig. 3 serves to illustrate an electronic money refund processing method of an embodiment of the present invention;
Fig. 4 is a flowchart for the electronic money refund processing method of the embodiment of the present invention; and
Fig. 5 serves to illustrate settlements.

BEST MODE FOR CARRYING OUT THE INVENTION

An embodiment of the present invention will now be described below in accordance with the drawings. However, the technological scope of the present invention is not limited to or by such an embodiment.

The electronic money transaction processing system according to the embodiment of the present invention is exemplified by a POS system installed in a retail store as shown in Fig. 1, and comprises a plurality of POS terminals 1 for making the settlement for a good purchased by a consumer, and a server 2 which is communicably connected to the plurality of POS terminals 1, wherein the POS terminal 1 is an electronic money terminal, and the server 2 is connected to a host computer (not illustrated) which is at a banking facility and is for electronic money settlements. However, the electronic money system is not restricted to a terminal server type system, and may instead be a stand-alone computer system or portable-type terminal, or the like, which is connected to the host computer of the banking facility, for example. Further, the electronic money terminal and the server may be connected by a public line such as a telephone line, or may be connected by a dedicated line. Further, the server and the banking facility host computer can be connected via either a public line or a dedicated line. However, when a public line is used, data transmitted via the line is preferably encrypted in order to preserve security.

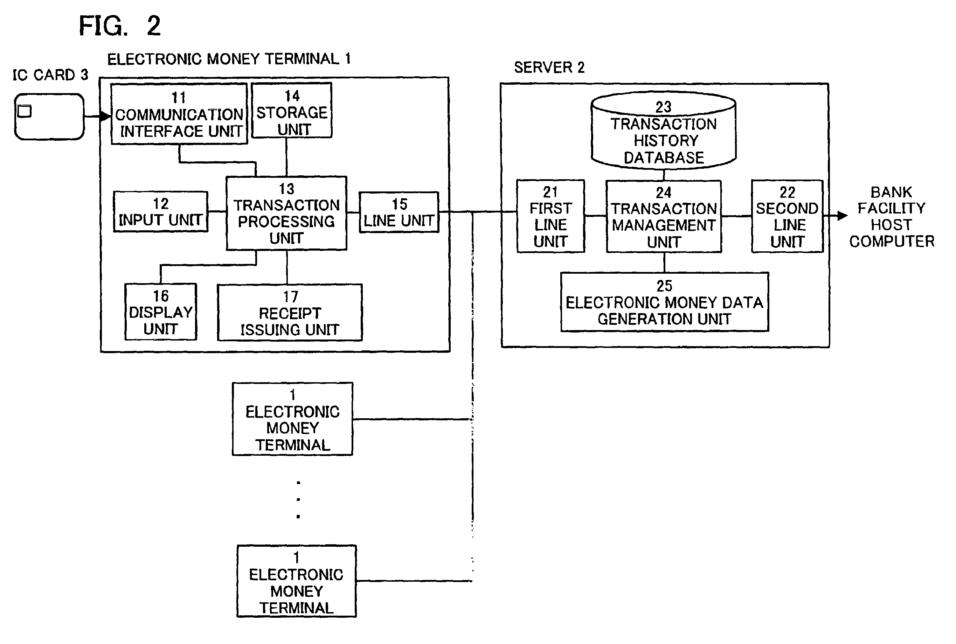

Fig. 2 is a block diagram of the electronic money terminal 1 and the server 2 that constitute the electronic money transaction processing system. The electronic money terminal 1 comprises a communication interface unit 11 for transmitting and receiving electronic money data to and from an IC card for storing electronic money; an input unit 12 for inputting predetermined information, such as a keyboard or barcode scanner, or the like; a transaction processing unit 13 for generating transaction data on the basis of information from the input unit 12 and communications with the IC card 3; a storage unit 14 for temporarily storing generated transaction data; a line unit 15 for communicating with the server 2; a display unit 16; and a receipt issuing unit 17.

Further, the server 2 comprises a first line unit 21 for communicating with the electronic money terminal 1; a second line unit 22 for communicating with the host computer of the banking facility; a transaction history database 23 for storing transaction data transmitted from the electronic money terminal as a history; a transaction management unit 24 for managing the transaction history database 23; and an electronic money data generation unit (referred to simply as generation unit hereinafter) 25 for generating electronic money data in accordance with a refund request which will be described hereinbelow.

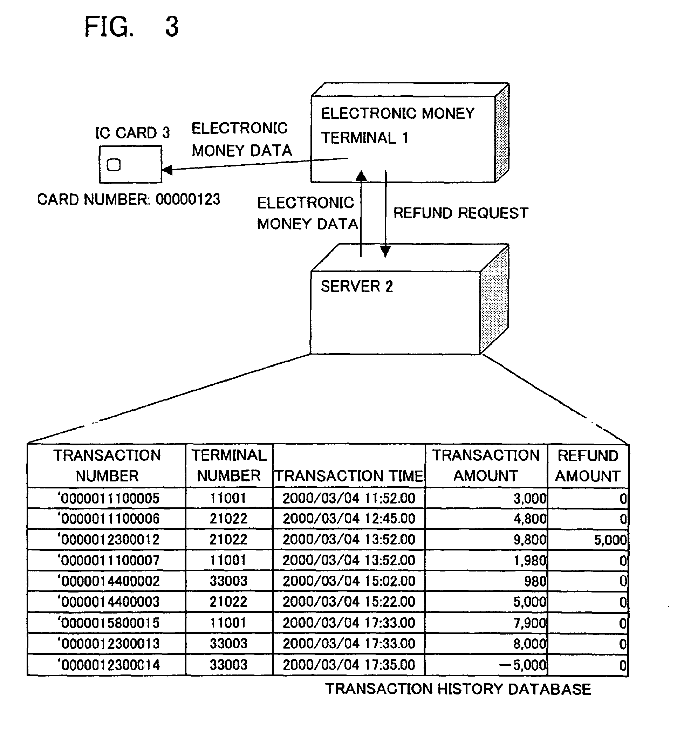

Fig. 3 serves to illustrate an electronic money refund processing method of an embodiment of the present invention. In this embodiment, the electronic money terminal 1 transmits electronic money data which corresponds to the refund amount generated by the server 2 to the IC card 3, and directly refunds electronic money to the IC card 3.

In making a refund request, the user presents his or her own IC card, along with a receipt received at the time of a past transaction, to an operator of an electronic money terminal. A variety of transaction data is printed on the receipt, such as the transaction number, the electronic money terminal number, the transaction time, and the transaction amount. The transaction number is produced by combining the card number of the user's IC card and the serial number of the transaction performed using this IC card, for example. The IC card contains a counter and counts the transaction frequency each time the IC card is used. By way of example, in a case where the card number is "00000123", and the frequency of transactions performed by means of the IC card is now twelve, the transaction number is expressed as "00000012300012".

Further, by way of example, refund processing for a transaction with the transaction number "00000012300012", for example, is also recorded as a transaction which is identified by a new transaction number ("00000012300014" in Fig. 3), the transaction amount being a negative amount (a transaction amount for an ordinary payment transaction performed by a customer is a positive amount). Further, for a transaction directed toward refund processing ("00000012300012" in Fig. 3), the amount refunded by refund processing (the refunded amount) is recorded.

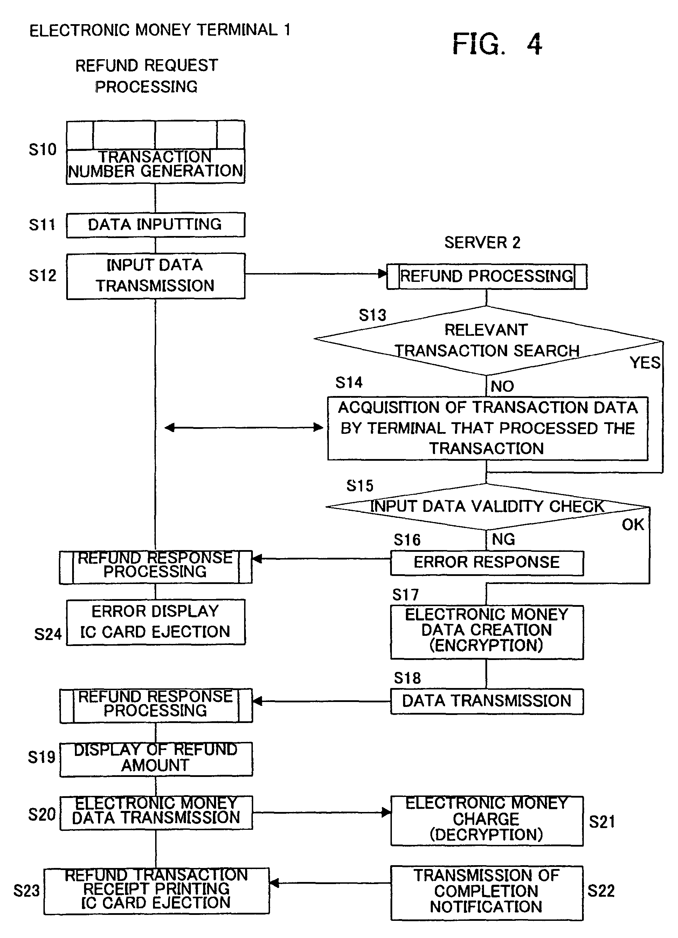

Fig. 4 is a flowchart for the electronic money refund processing method of the embodiment of the present invention. Fig. 4 will be described through reference to Figs. 2 and 3.

The operator starts refund request processing by inserting the IC card 3 into the electronic money terminal thereby rendering the communication interface unit 11 of the electronic money terminal 1 capable of communicating with the IC card 3. This refund request processing is also one transaction. For example, pressing a "refund processing" button (not illustrated), which is disposed in the input unit 12 of the electronic money terminal 1 causes the IC card 3 to count the transaction frequency and transmit this frequency along with the IC card number to the electronic money terminal 1.

The transaction processing unit 13 of the electronic money terminal 1 generates a transaction number (S10), this number being produced by combining the IC card number and the transaction frequency, and creates transaction data which corresponds to this transaction number in accordance with the progress of refund request processing. In the present embodiment, a description is provided for a refund request with respect to a transaction having the transaction number "00000012300012" in the transaction history shown in Fig. 3. In the transaction history shown in Fig. 3, the transaction number of the refund request processing is "00000012300014". Further, in a case where electronic money is refunded to the IC card 3 by means of the refund processing indicated below, the data for the refunded amount may be added to the transaction data having the transaction number "00000012300012", as shown in the transaction history in Fig. 3.

The operator inputs past transaction data which is to be the subject of a refund via the input unit 12 of the electronic money terminal 1 and in accordance with the receipt (S11). Then, the electronic money terminal 1 connects to the server 2 so as to be capable of communicating therewith (on-line) to thereby transmit a refund request which includes the inputted transaction data (input data) and the refund request amount to the server (S12). The electronic money terminal 1 and the server 2 may be in an on-line state permitting continuous communication or may normally be in a state of being disconnected (offline) and switched to an on-line state only at the time of a data transmission.

The server 2 comprises the transaction history database 23 as illustrated in Fig. 3. The server 2 checks the input data and the transaction history database 23. Specifically, the generation unit 25 of the server 2 searches the transaction history database 23 with input data being taken as the condition (S13). Thereupon, the generation unit 25 conducts a search taking the transaction number in the input data as the condition, for example, and, upon finding transaction data whose transaction number matches, judges the validity of the input data in accordance with this transaction data (S15). More specifically, it is confirmed whether or not other information excluding the transaction number in the input data matches the transaction data. It is also confirmed whether or not the refund request amount is equal to or less than the transaction amount. The refunding of an amount higher than the transaction amount of the transaction which is the subject of the refund is prevented. If the transaction data matches and the refund amount is equal to or less than the transaction amount, the generation unit 25 generates electronic money data which corresponds to the refund amount (S17). The electronic money data is in a format that is the same as the electronic money data created by the payment terminal which is managed by the banking facility. In other words, the server has the electronic money generation functions possessed by the payment terminal only as far as refund processing is concerned. The generation unit 25 of the server 2 preferably encrypts generated electronic money data and then sends this data back to the electronic money terminal 1 (S18).

Upon receiving electronic money data, the electronic money terminal 1 reads out display data for displaying the refund amount included in the electronic money data on the display unit 16 of the electronic money terminal 1 and thus displays the refund amount on the display unit 16 (S19), which serves to permit user confirmation. The display data is not encrypted.

The transaction processing unit 13 of the electronic money terminal 1 transmits the received electronic money data to the IC card 3 via the communication interface unit 1 (S20). The IC card 3 decrypts the electronic money data by means of a decryption key which is installed on the card beforehand, whereby electronic money which corresponds to the refund amount is charged to the IC card 3 (S21). When the electronic money charge is complete, the IC card 3 transmits a completion notification to the electronic money terminal 1 (S22). The receipt issuing unit 17 of the electronic money terminal 1 prints the transaction receipt that corresponds to the refund request processing on the basis of the completion notification, and discharges this receipt along with the IC card 3 (S23).

Further, consideration has also been paid to a case where, in step S13, transaction data which corresponds to the input data is not found. This represents a case where the electronic money terminal 1 and the server 2 are normally in an off-line state and, when the electronic money terminal 1 collates the transaction data for one day on this day after the close of business of the retail store and transmits this data to the server 2, a refund request is made for the transactions on the same day as the transactions. In such a case, because transaction data for the transactions in question is not transmitted to the server 2, the generation unit 25 of the server 2 searches for transaction data stored in the storage unit 14 of the electronic money terminal 1 via a communication line, thus acquiring transaction data for these transactions (S14).

Further, in step S15, when, due to the existence of an inputting error in the input data, the input data and the transaction data do not match, the generation unit 25 of the server 2 transmits an error response to the electronic money terminal 1 (S16), and the electronic money terminal 1 displays error detail information (an error code and the like), which is contained in the error response, on the display unit 16, and ejects the IC card (S24).

Thus, in the embodiment of the present invention, the server managed by the retail store creates electronic money data which corresponds to the refund amount and refunds the electronic money directly to the IC card via the electronic money terminal. The user can accordingly instantly receive the refund amount, and, because the refund is made to the IC card as electronic money, the user is relieved of the task of paying electronic money to the IC card from his or her own banking facility account by operating a payment terminal.

As described hereinabove, when the electronic money terminal and the server are normally in an offline state, and the electronic money terminal collates transaction data for one day on this day after the close of business of the retail store and transmits this data to the server, the server also transfers, in batch form, the transaction data from the electronic money terminal to the host computer of the banking facility on a daily basis. The host computer of the banking facility performs a settlement by transferring a transaction amount between accounts on the basis of the transaction data.

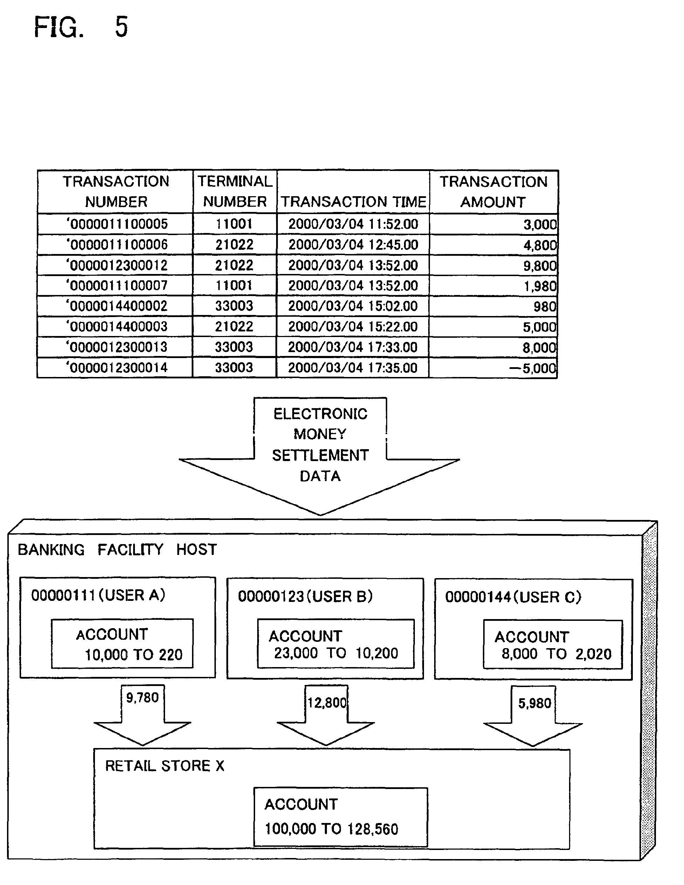

Fig. 5 serves to illustrate settlements. Settled transaction data are shown in Fig. 5. Of the transaction data shown by way of example, the transaction number "0000012300014" is a transaction which corresponds to refund processing performed on the same day as the transaction having the transaction number "000012300012", and because a payment is not made to the user by the retail store, the transaction amount is shown as negative. Also, in Fig. 4, the IC card holder of card number "0000111" is user A, the IC card holder of card number "0000123" is user B, and the IC card holder of card number "0000144" is user C. The host computer totalizes the transaction amounts for each card number contained in the transaction number. Therefore, the total of the transaction amounts for user A is:

$$3000+4800+1980 = 9780 \text{ Japanese yen;}$$

the total of the transaction amounts for user B is:

$$9800+8000-5000 = 12800 \text{ Japanese yen;}$$

and
the total of the transaction amounts for user C is:

$$980+5000 = 5980 \text{ Japanese yen.}$$

The banking facility host computer makes a funds transfer of the total sum of these transaction amounts from the respective accounts of the users A, B, and C to the account of retail store X. Further, in cases where the total of the transaction amounts for a given user is negative, a funds transfer may be made from the retail store X's account to the user's account. For example, when a given user has made a refund request for a predetermined transaction during the time following the date of performing the transaction with retail store X, the transaction amount which corresponds to this transaction has already been settled, and thus the transaction amount total for this user, as acquired by the host computer on the date the refund request is made, is a negative transaction amount.

As described above, settlement can involve totalizing the transaction amounts of a plurality of transactions for each user and making a settlement based on the totalized amount, or making a settlement for each individual transaction. Further, the settlements of the banking facility may be performed between a plurality of banking facility host computers.

Further, electronic money is not restricted to an IC card but rather can be held by a variety of storage media, such as the main body of a computer apparatus, for example.

Furthermore, in the above embodiment, a payment transaction performed by a customer and a customer refund transaction are distinguished in terms of the transaction amount by a positive amount and a negative amount respectively but may also be distinguished on the basis of other items in the transaction history database. For example, a reference symbol serving to distinguish between a payment transaction and a refund transaction can be incorporated in the transaction number. Another reference symbol serving to identify the payment transaction and the refund transaction may also be introduced.

INDUSTRIAL APPLICABILITY

As described hereinabove, according to the present invention, electronic money data which corresponds to the refund amount is transmitted directly to an IC card in response to a refund request from a user. Therefore, the user is able to instantly receive the refund amount as electronic money and, because the user is relieved of the task of paying electronic money from his or her own banking facility account to the IC card, user convenience is improved. Also, because the refund is made in the form of electronic money rather than cash, settlement processing is unified and therefore simplified. Moreover, checking the validity of the refund beforehand avoids erroneous refund processing and mistakes with the refund amount.

The scope of protection of the present invention is not limited to or by the present embodiment, but rather is intended to cover the inventions that appear in the claims as well as any equivalents thereof.

**Claims**

1. An electronic money transaction processing system for processing a transaction performed by means of electronic money, comprising:

    a communication unit for communicating with a storage medium that stores electronic money data and for receiving, for each transaction, electronic money data which corresponds to a paid transaction amount from the storage medium;
    a first storage unit for storing transaction data including at least a transaction amount for each transaction, and identification information identifying each transaction;
    an input unit for inputting a refund request to request a refund of a predetermined amount with respect to a predetermined transaction; and
    an electronic money data generation unit for generating electronic money data which corresponds to a predetermined amount on the basis of the refund request,

    wherein the communication unit transmits the generated electronic money data to the storage medium.

2. The electronic money transaction processing system as claimed in claim 1, wherein the refund request includes identification information identifying the predetermined transaction; and the electronic money data generation unit searches for transaction data for each transaction which are stored in the first storage unit, thereby detects the transaction data which includes the identification information of the predetermined transaction, and in a case where the transaction amount of the detected transaction data is equal to or more than the predetermined amount, generates electronic money data which corresponds to the predetermined amount.

3. The electronic money transaction processing system as claimed in claim 1, wherein the electronic money transaction processing system is a POS system provided with at least one terminal, and a server connected thereto via a communication line, and
    wherein the terminal includes the input unit, the communication unit, and a transaction data generation unit for generating transaction data for each transaction; the server includes the first storage unit and the electronic money generation unit; the terminal transmits the transaction data generated by the transaction data generation unit to the storage unit of the server via the communication line; and the server transmits electronic money data generated by the electronic money generation unit to the terminal via the communication line.

4. The electronic money transaction processing system as claimed in claim 3, wherein the terminal further comprises a second storage unit for temporarily storing transaction data generated by the transaction data generation unit; and the transaction data stored in the second storage unit is transmitted to the first storage unit of the server at predetermined time intervals.

5. The electronic money transaction processing system as claimed in claim 4, wherein, when the refund request is inputted via the input unit, the refund request is transmitted from the terminal to the server; and, in a case where the electronic money generation unit of the server do not detect transaction data that corresponds to the refund request from the first storage unit, the electronic money generation unit searches the second storage unit of the terminal via the communication line.

6. The electronic money transaction processing system as claimed in claim 3, wherein the electronic money generation unit transmits the electronic money data after encrypting same; and the storage medium receives the encrypted electronic money data and then decrypts same.

7. A computer apparatus having a database for managing money transactions with a customer, the database comprising:

    identification information identifying each money transaction with the customer;
    a transaction amount for the money transaction which corresponds to each item of identification information, and
    an amount refunded when a customer refund transaction occurs, with respect to the money transaction which corresponds to each item of identification information.

8. The computer apparatus as claimed in claim 7, wherein the money transaction includes a money payment transaction by the customer, and a customer refund transaction to the customer; and the database performs recording by distinguishing the money payment transaction and the refund transaction.

9. The computer apparatus as claimed in claim 8, wherein the database records the transaction amount of the money payment transaction as a positive amount, and the transaction amount of the refund transaction as a negative amount.

# FIG. 1

IC CARD 3

CARD NUMBER: 00000123

ELECTRONIC MONEY
TERMINAL 1

TELEPHONE LINE OR THE LIKE

SERVER 2

| TRANSACTION NUMBER (CARD NUMBER + TRANSACTION SERIAL NUMBER) | TERMINAL NUMBER | TRANSACTION TIME | TRANSACTION AMOUNT |
|---|---|---|---|
| '0000011100005 | 11001 | 2000/03/04 11:52.00 | 3,000 |
| '0000011100006 | 21022 | 2000/03/04 12:45.00 | 4,800 |
| '0000012300012 | 21022 | 2000/03/04 13:52.00 | 9,800 |
| '0000011100007 | 11001 | 2000/03/04 13:52.00 | 1,980 |
| '0000014400002 | 33003 | 2000/03/04 15:02.00 | 980 |
| '0000014400003 | 21022 | 2000/03/04 15:22.00 | 5,000 |
| '0000015800015 | 11001 | 2000/03/04 17:33.00 | 7,900 |
| '0000012300013 | 33003 | 2000/03/04 17:33.00 | 8,000 |

TRANSACTION HISTORY DATABASE

## FIG. 2

ELECTRONIC MONEY TERMINAL 1

IC CARD 3

SERVER 2

**11** COMMUNICATION INTERFACE UNIT

**14** STORAGE UNIT

**12** INPUT UNIT

**13** TRANSACTION PROCESSING UNIT

**15** LINE UNIT

**16** DISPLAY UNIT

**17** RECEIPT ISSUING UNIT

**23** TRANSACTION HISTORY DATABASE

**21** FIRST LINE UNIT

**24** TRANSACTION MANAGEMENT UNIT

**22** SECOND LINE UNIT

**25** ELECTRONIC MONEY DATA GENERATION UNIT

BANK FACILITY HOST COMPUTER

**1** ELECTRONIC MONEY TERMINAL

**1** ELECTRONIC MONEY TERMINAL

EP 1 313 041 A1

# FIG. 3

IC CARD 3  ELECTRONIC MONEY DATA  ELECTRONIC MONEY TERMINAL 1

CARD NUMBER: 00000123

ELECTRONIC MONEY DATA  REFUND REQUEST

SERVER 2

| TRANSACTION NUMBER | TERMINAL NUMBER | TRANSACTION TIME | TRANSACTION AMOUNT | REFUND AMOUNT |
|---|---|---|---|---|
| '0000011100005 | 11001 | 2000/03/04 11:52.00 | 3,000 | 0 |
| '0000011100006 | 21022 | 2000/03/04 12:45.00 | 4,800 | 0 |
| '0000012300012 | 21022 | 2000/03/04 13:52.00 | 9,800 | 5,000 |
| '0000011100007 | 11001 | 2000/03/04 13:52.00 | 1,980 | 0 |
| '0000014400002 | 33003 | 2000/03/04 15:02.00 | 980 | 0 |
| '0000014400003 | 21022 | 2000/03/04 15:22.00 | 5,000 | 0 |
| '0000015800015 | 11001 | 2000/03/04 17:33.00 | 7,900 | 0 |
| '0000012300013 | 33003 | 2000/03/04 17:33.00 | 8,000 | 0 |
| '0000012300014 | 33003 | 2000/03/04 17:35.00 | −5,000 | 0 |

TRANSACTION HISTORY DATABASE

ELECTRONIC MONEY TERMINAL 1

REFUND REQUEST
PROCESSING

# FIG. 4

S10 — TRANSACTION NUMBER GENERATION

S11 — DATA INPUTTING

S12 — INPUT DATA TRANSMISSION

SERVER 2

REFUND PROCESSING

S13 — RELEVANT TRANSACTION SEARCH — YES / NO

S14 — ACQUISITION OF TRANSACTION DATA BY TERMINAL THAT PROCESSED THE TRANSACTION

S15 — INPUT DATA VALIDITY CHECK — OK / NG

S16 — ERROR RESPONSE

REFUND RESPONSE PROCESSING

S24 — ERROR DISPLAY IC CARD EJECTION

S17 — ELECTRONIC MONEY DATA CREATION (ENCRYPTION)

S18 — DATA TRANSMISSION

REFUND RESPONSE PROCESSING

S19 — DISPLAY OF REFUND AMOUNT

S20 — ELECTRONIC MONEY DATA TRANSMISSION

S21 — ELECTRONIC MONEY CHARGE (DECRYPTION)

S22 — TRANSMISSION OF COMPLETION NOTIFICATION

S23 — REFUND TRANSACTION RECEIPT PRINTING IC CARD EJECTION

# FIG. 5

| TRANSACTION NUMBER | TERMINAL NUMBER | TRANSACTION TIME | TRANSACTION AMOUNT |
|---|---|---|---|
| '0000011100005 | 11001 | 2000/03/04 11:52.00 | 3,000 |
| '0000011100006 | 21022 | 2000/03/04 12:45.00 | 4,800 |
| '0000012300012 | 21022 | 2000/03/04 13:52.00 | 9,800 |
| '0000011100007 | 11001 | 2000/03/04 13:52.00 | 1,980 |
| '0000014400002 | 33003 | 2000/03/04 15:02.00 | 980 |
| '0000014400003 | 21022 | 2000/03/04 15:22.00 | 5,000 |
| '0000012300013 | 33003 | 2000/03/04 17:33.00 | 8,000 |
| '0000012300014 | 33003 | 2000/03/04 17:35.00 | −5,000 |

ELECTRONIC MONEY SETTLEMENT DATA

BANKING FACILITY HOST

00000111 (USER A)

ACCOUNT
10,000 TO 220

00000123 (USER B)

ACCOUNT
23,000 TO 10,200

00000144 (USER C)

ACCOUNT
8,000 TO 2,020

9,780

12,800

5,980

RETAIL STORE X

ACCOUNT
100,000 TO 128,560

## INTERNATIONAL SEARCH REPORT

| International application No. |
|---|
| PCT/JP00/05003 |

| A. CLASSIFICATION OF SUBJECT MATTER |
|---|
| Int.Cl$^7$  G06F17/60, G06F19/00, G07G1/14 |

According to International Patent Classification (IPC) or to both national classification and IPC

| B. FIELDS SEARCHED |
|---|

| Minimum documentation searched (classification system followed by classification symbols) |
|---|
| Int.Cl$^7$  G06F17/60, G06F19/00, G07G1/14 |

Documentation searched other than minimum documentation to the extent that such documents are included in the fields searched
Jitsuyo Shinan Koho          1926-1996      Jitsuyo Shinan Toroku Koho  1996-2000
Kokai Jitsuyo Shinan Koho   1971-2000      Toroku Jitsuyo Shinan Koho  1994-2000

Electronic data base consulted during the international search (name of data base and, where practicable, search terms used)
JICST FILE on Science and Technology [(electronic money+digital cash)*repayment]
(in Japanese)
WPI [(electronic*money+digital*cash)*(repay?+refund?)]
INSPEC [(electronic*money+digital*cash)*(repay?+refund?)]

| C. | DOCUMENTS CONSIDERED TO BE RELEVANT | |
|---|---|---|
| Category* | Citation of document, with indication, where appropriate, of the relevant passages | Relevant to claim No. |
| X<br>Y | JP 10-307951 A (Hitachi, Ltd.),<br>17 November, 1998 (17.11.98),<br>Full text, especially, Par. No. [0044]<br>Full text<br>(Family: none) | 1<br>2-6 |
| Y | JP 8-115389 A (Hitachi, Ltd.),<br>07 May, 1996 (07.05.96),<br>Par. Nos. [0067] to [0070]<br>(Family: none) | 2 |
| Y<br>X | JP 10-188141 A (NEC Corporation),<br>21 July, 1998 (21.07.98),<br>Full text, especially, Par. Nos. [0026] to [0041]<br>Full text, especially, Par. Nos. [0026] to [0041]<br>(Family: none) | 3-6<br>7-9 |
| A | EP 0865007 A2 (Fujitsu Limited),<br>16 September, 1998 (16.09.98),<br>Full text, especially, page 6, left column, lines 10<br>to 54<br>& JP 10-307883 A     & CN 1199205 A | 1-9 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search<br>31 August, 2000 (31.08.00) | Date of mailing of the international search report<br>12 September, 2000 (12.09.00) |
|---|---|
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.

PCT/JP00/05003

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-40321 A (Oki Electric Industry Co., Ltd.), 13 February, 1998 (13.02.98), Full text (Family: none) | 1-9 |
| A | JP 11-96255 A (Toshiba Tec Corporation), 09 April, 1999 (09.04.99), Full text (Family: none) | 3-9 |
| A | EP 0858057 A2 (Fujitsu Limited), 12 August, 1998 (12.08.98), Full text & JP 11-3387 A | 1-9 |

Form PCT/ISA/210 (continuation of second sheet) (July 1992)